Europäisches Patentamt

European Patent Office

Office européen des brevets

(11) Veröffentlichungsnummer : **0 069 909**
B1

(12) # EUROPÄISCHE PATENTSCHRIFT

(45) Veröffentlichungstag der Patentschrift :
15.08.84

(21) Anmeldenummer : 82105710.6

(22) Anmeldetag : 28.06.82

(51) Int. Cl.³ : **B 29 D 27/02**, B 29 B 1/04,
B 01 F 13/06

(54) **Verfahren und Vorrichtung zum Einmischen von pulverförmigen bis kleinteiligen Zusatzstoffen in eine flüssige Reaktionskomponente.**

(30) Priorität : 10.07.81 DE 3127218

(43) Veröffentlichungstag der Anmeldung :
19.01.83 Patentblatt 83/03

(45) Bekanntmachung des Hinweises auf die Patenterteilung : 15.08.84 Patentblatt 84/33

(84) Benannte Vertragsstaaten :
DE FR GB IT

(56) Entgegenhaltungen :
DE-A- 2 334 189
DE-B- 2 445 287
GB-A- 1 395 571
Patent Abstracts of Japan Band 5, Nr. 144, 11. September 1981 Seite 816C71

(73) Patentinhaber : BAYER AG
Konzernverwaltung RP Patentabteilung
D-5090 Leverkusen 1 Bayerwerk (DE)

(72) Erfinder : Kreuer, Karl Dieter
Käthe-Kollwitz-Strasse 1
D-5090 Leverkusen (DE)
Erfinder : Klier, Lothar, Ing. grad.
Brucher Weg 24
D-5653 Leichlingen (DE)

## Beschreibung

Die Erfindung richtet sich auf ein Verfahren und eine Vorrichtung zum Einmischen von pulverförmigen bis kleinteiligen Zusatzstoffen bei gleichzeitiger Entgasung in mindestens eine der flüssigen Reaktionskomponenten für die Herstellung eines Massivstoff oder Schaumstoff bildenden Reaktionsgemisches, wobei die Reaktionskomponente in einen Raum eingebracht wird, den sie nur bis zu einem vorgegebenen Füllspiegel ausfüllt, und wobei oberhalb des Füllspiegels der Raum abgedichtet und Vakuum angelegt ist und wobei in der flüssigen Reaktionskomponente Rührturbulenz erzeugt wird.

Massiv- oder Schaumstoffe bzw. daraus geformte Artikel sollen oft besondere Eigenschaften bezüglich Qualität und Festigkeit aufweisen. Zu diesem Zwecke bringt man Zusatzstoffe ein, die je nach ihrer Art den Sinn haben, das Eigenschaftsniveau zu verbessern oder die Materialkosten zu senken. Im ersten Fall handelt es sich um pulverförmige, faserige, plättchenförmige, körnige Verstärkungsstoffe, wie insbesondere Glasfaser, Glimmer, Bariumsulfat. Im zweiten Fall handelt es sich gegenüber den Reaktionskomponenten um billigere, minderwertigere Füllstoffe, wie beispielsweise Kreidepulver, Holzmehl, zerkleinerter Abfallschaumstoff.

Es sind schon die verschiedensten Vorschläge gemacht worden, durch besondere apparative Gestaltungen die Zusatzstoffe direkt in das Reaktionsgemisch einbringen zu können oder sie wenigstens einem der Reaktionsteilnehmer vorher zuzumischen. Allen diesen Versuchen haftete der Mangel an, daß die Dosiergenauigkeit zu wünschen übrig ließ und die von Zusatzstoff mitgeführte Luft auf das Endprodukt qualitätsmindernd wirkt. Um ein exaktes Dosierverhältnis zu gewährleisten, hat man deshalb immer wieder auf die einfache Methode zurückgegriffen, die Zusatzstoffe mindestens einer der Reaktionskomponenten vorher in einem Rührwerksbehälter zuzumische, indem man chargenweise arbeitet. Dabei tritt jedoch eine starke Staubentwicklung auf, durch die das Bedienungspersonal belästigt wird und wodurch im Einzelfalle sogar das Dosierverhältnis merklich verfälscht wird. Schließlich besteht noch die weitere Schwierigkeit, daß insbesondere verstärkende Zusatzstoffe in Form von Kurzfasern bei dem Vermischungsvorgang nicht noch stärker zerkleinert werden dürfen, weil sich sonst die verstärkenden Eigenschaften ändern und auch ein höherer Verschleiß der Apparatur dabei erfolgt. Bei alledem wird auch noch eine homogene Verteilung der Zusatzstoffe in der Reaktionskomponente bei möglichst kurzer Rührzeit vorausgesetzt.

Es ist bereits eine Vorrichtung (DE-B2-2 445 287) zum Mischen und/oder Entgasen von hochviskosen Medien unter Vakuum bekannt, insbesondere von Gießharzkomponenten, bestehend aus einem evakuierbaren Behälter mit einer oder mehreren Beschickungsöffnung(en) und einer Entnahmeöffnung sowie einer Rührwendel, welche den Inhalt zum Zwecke der Entgasung über den Füllspiegel fördert und dabei gleichzeitig mischt. Pulverförmige oder kleinteilige Zusatzstoffe lassen sich nicht staubfrei in den Behälter einbringen, es sei denn, man sieht kostspielige Beschickungsvorrichtungen vor. Die Oberflächenvergrößerung durch die Förderung über den Füllspeigel bewirkt zwar eine momentane Entgasung ; aber beim Abtropfen und Aufschlagen auf den Füllspiegel wird im Behälter verbliebene Restluft gleich wieder eingeschlagen. Der Entgasungsvorgang ist also sehr langwierig.

Es gilt die Aufgabe zu lösen, ein Verfahren und eine Vorrichtung zu schaffen, womit man Zusatzstoffe der eingangs genannten Art mindestens einer der Reaktionskomponenten staub- und verlustfrei im exakten Dosierverhältnis zugeben und darin innerhalb kurzer Zeit homogenisieren und das hergestellte Gemisch schließlich auch noch ausreichend entgasen kann.

Die neue Verfahrensweise ist darin zu sehen, daß der Zusatzstoff unterhalb des Füllspiegels zugeführt und mittels des Unterdruckes in den Raum eingebracht wird.

Durch diese Maßnahme wird erreicht, daß sowohl die Komponente als auch der Zusatzstoff in abgemessenen Mengen in den Behälter eingebracht werden können, wobei beim Einbringen des Zusatzstoffes durch die stattfindende Benetzung keinerlei Staubentwicklung entsteht, wenn man darauf achtet, daß bei gegebener Anfangsviskosität der Komponente die Höhe der Drehzahl, der Füllstand und die Saugkraft so gewählt werden, daß ein Hindurchreißen des Füllstoffes durch die Flüssigkeitssäule vermieden wird. Die entsprechenden Bedingungen kann der Fachmann durch einfache Versuche ermitteln. Durch den angelegten Unterdruck findet gleichzeitig eine Entgasung des sich bildenden Gemisches aus Reaktionskomponente und Zusatzstoff statt.

Vorzugsweise wird die Entgasung der Reaktionskomponente und des Zusatzstoffes nach Beendigung des Zusatzstoffeintrages fortgesetzt.

Nach beendetem Eintrag kann nämlich die Eintragsstelle abgedichtet werden, wodurch weitere Luftzufuhr verhindert wird und die Entgasungswirkung des Unterdruckes noch stärker wird.

Da an den besagten Raum Unterdruck angelegt werden kann, ist es nach einer besonderen Durchführungsform des Verfahrens auch möglich, die Reaktionskomponente durch Unterdruck in den Raum einzubringen.

Auf diese Weise werden ansonsten eventuell notwendige Pumpen überflüssig.

Die Vorrichtung zum Durchführen des Verfahrens geht aus von einem abdichtbaren Behälter mit darin angeordnetem Rührwerk sowie Zuführleitungen für die flüssige Reaktionskomponente und den Zusatzstoff und einem Ablauf für die flüssige, mit dem Zusatzstoff beladene Reaktionskomponente, wobei der Behälter oberhalb des Füllspiegels einen Saugstutzen aufweist, der über eine Absaugleitung an eine Vakuumquelle angeschlossen ist.

Das Neue ist darin zu sehen, daß die Zusatzstoff-Zuführleitung unterhalb des Füllspiegels in den Behälter einmündet.

Beim Betrieb dieser Vorrichtung treten die im Zusammenhang mit dem Verfahren beschriebenen Vorteile auf. Die Vorrichtung selbst ist leicht herstellbar, weil man gegebenenfalls serienmäßige Behälter nur mit entsprechenden Anschlüssen auszustatten braucht. Bildet man das Ansaugende der Zusatzstoff-Zuführleitung als biegsames Rohr aus, wie es beispielsweise bei Haushaltsstaubsaugern Anwendung findet, so läßt sich erforderlichenfalls der Zusatzstoff direkt aus der angelieferten Packung durch Hineinstecken des Schlauchendes ansaugen, ohne daß man weiterer Vorratsgefäße bedürfte. Als Vakuumquelle dient beispielsweise ein Sauggebläse entsprechender Leistung.

Es versteht sich, daß die Zusatzstoff-Zuführleitung vor dem Einbringen der Reaktionskomponente und Anlegen des Vakuums so gesichert sein muß, daß ein Auslaufen der Reaktionskomponente durch diese Leitung verhindert wird. Dazu bietet sich u. a. folgende Alternative :

In der Zusatzstoff-Zuführleitung ist ein Absperrventil angeordnet oder die Zusatzstoff-Zuführleitung ist über die Höhe des Füllspiegels geführt.

Nach einer besonderen Ausführungsform mündet die Zusatzstoff-Zuführleitung tangential, und zwar in Drehrichtung des Rührwerkes, in den Behälter ein.

Durch diese Maßnahme wird das Ansaugen des Zusatztoffes begünstigt und die Verteilung in der Reaktionskomponente erleichtert.

Vorzugsweise mündet die Zusatzstoff-Zuführleitung im Überstreichungsbereich des Rührwerkes.

Diese Maßnahme hat den besonderen Vorteil, daß die Rührarme bei Überstreichen der Mündung den eintretenden Zusatzstoff sofort erfassen und nicht nur in Rotationsrichtung, sondern auch radial verteilen. Dabei werden sich eventuell bildende größere Luftblasen zerschlagen. Dadurch wird vermieden, daß derartige Blasen in der Flüssigkeitssäule aufsteigen, an der Oberfläche zerplatzen und dabei der eingeschlossene pulverförmige Zusatzstoff als Staub abgesaugt wird. Bei normalen Betriebsbedingungen mit aufeinander abgestimmten Parametern werden solche Blasen so klein zerschlagen, daß der enthaltene Zusatzstoff von der Reaktionskomponente benetzt und damit gebunden wird, so daß lediglich die Luftbläschen an der Oberfläche — ohne Staub zu verursachen — platzen.

In einer Zeichnung ist die neue Vorrichtung in einem Ausführungsbeispiel rein schematisch dargestellt und nachstehend näher erläutert. Es zeigen :

Figur 1   die Vorrichtung in der Seitenansicht ;
Figur 2   einen Schnitt durch die Vorrichtung gemäß Linie A/B in Fig. 1 ;
Figur 3   einen Abriß der Vorrichtung mit einer alternativen Ausführungsform der Zusatzstoff-Zuführleitung.

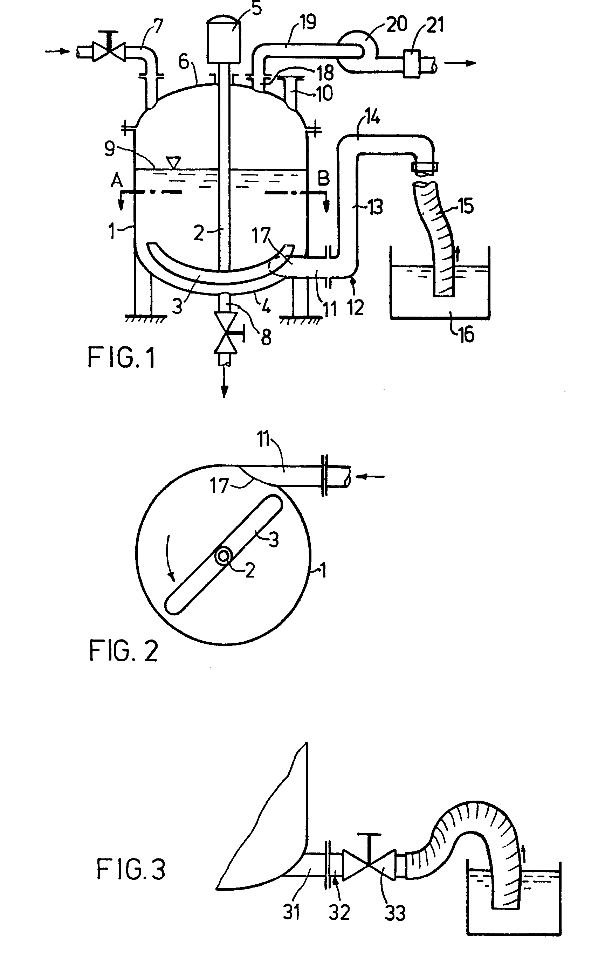

In Fig. 1 und 2 besteht die Vorrichtung aus einem Behälter 1, in welchem ein Rührwerk 2 angeordnet ist, dessen Rührarme 3 über den Boden 4 des Behälters streichen. Der Antrieb 5 des Rührwerkes ist auf dem Behälterdeckel 6 gelagert. Durch den Behälterdeckel 6 mündet ein absperrbarer Zulauf 7 ein, während sich der absperrbare Ablauf 8 für das Gemisch aus Reaktionskomponente und Füllstoff am Boden des Behälters 4 befindet. Der Füllspiegel ist mit 9 bezeichnet. Am Behälterdeckel 6 ist außerdem noch ein Schauloch 10 angeordnet. Unterhalb des Füllspiegels 9 mündet ein Zusatzstoff-Zuführstutzen 11 tangential in den Behälter 1 ein, der Teil einer Zusatzstoff-Zuführleitung 12 ist. Diese besteht weiterhin aus einem starren Rohrabschnitt 13, der einen über die Höhe des Füllspiegels 9 hochgeführten Krümmer 14 aufweist. Das Ende der Füllstoff-Zuführleitung 12 ist als biegsamer Saugschlauch ausgebildet und ragt in eine Vorratspackung 16, die Kurzglasfasern als Verstärkungsstoff enthält, hinein. Die Mündung 17 des Zusatzstoff-Zuführstutzens 11 ist im Überstreichungsbereich der Rührarme 3 des Rührwerkes 2 angeordnet. Am Behälterdeckel 6, also oberhalb des Füllspiegels 9, ist ein Saugstutzen 18 angeordnet, der über eine Saugleitung 19 mit einer als Sauggebläse ausgebildeten Vakuumquelle 20 verbunden ist. Austrittsseitig ist die Vakuumquelle 20 mit einem Luftfilter 21 versehen. Der Ablauf 8 ist mit einer nicht dargestellten Mischvorrichtung bekannter Bauart verbunden, in der die mit dem Zusatzstoff beladene Reaktionskomponente mit mindestens einer weiteren Reaktionskomponente vermischt wird.

In Fig. 3 ist der Zusatzstoff-Zuführstutzen 31 der Zusatzstoff-Zuführleitung 32 mit einem Absperrventil 33 versehen.

Beispiel

Benutzt wurde die Vorrichtung gemäß Fig. 1 und 3. Der Behälter 1 besaß ein Volumen von 200 l, einen Durchmesser von 0,6 m und eine Höhe von 1,0 m. Über den Zulauf 7 wurde als Reaktionskomponente Polyether eingefüllt, bis ein Füllspiegel von 0,55 m erreicht wurde. Die Anfangsviskosität des Polyethers betrug 1 200 mPas. Sodann wurde das aus einem Ankerrührer bestehende Rührwerk 2 mit 100 U/min in Rotation versetzt, das Absperrventil 33 geöffnet und das Sauggebläse 20 eingeschaltet. Bei einer Saugleistung von 6 000 l/min wurde ein Unterdruck von 200 mbar erzeugt. Über die Zusatzstoff-Zuführleitung 12 wurden mittels des angelegten Vakuums 75 kg Kurzglasfasern in die Flüssigkeitssäule eingesaugt und vom Rührwerk 2 darin vermengt. Die Saugleitung 19 hatte — ebenso wie die Zusatzstoff-Zuführleitung 32 —

einen lichten Durchmesser von 50 mm. Das in der Leitung 32 vorgesehene Absperrventil 33 drosselte den Durchströmdurchmesser auf 1". Der Eintrag des Zusatzstoffes dauerte etwa 5 min. Danach wurde das Absperrventil 33 geschlossen. Nach ca. 30 min Rührzeit waren die Glasfasern mit dem Polyether homogen vermischt und die Mischung ausreichend entgast.

**Ansprüche**

1. Verfahren zum Einmischen von pulverförmigen bis kleinteiligen Zusatzstoffen bei gleichzeitiger Entgasung in mindestens eine der flüssigen Reaktionskomponenten für die Herstellung eines Massivstoff oder Schaumstoff bildenden Reaktionsgemisches, wobei die Reaktionskomponente in einen Raum eingebracht wird, den sie nur bis zu einem vorgegebenen Füllspiegel (9) ausfüllt, und wobei oberhalb des Füllspiegels der Raum abgedichtet und Vakuum angelegt ist und wobei in der flüssigen Reaktionskomponente Rührturbulenz erzeugt wird, dadurch gekennzeichnet, daß mittels des Vakuums der unterhalb des Füllspiegels zugeführte Zusatzstoff eingebracht wird.

2. Verfahren nach Anspruch 1, dadurch gekennzeichnet, daß die Entgasung der Reaktionskomponente und des Zusatzstoffes nach Beendigung des Zusatzstoff-Eintrages fortgesetzt wird.

3. Verfahren nach den Ansprüchen 1 oder 2, dadurch gekennzeichnet, daß auch die Reaktionskomponente durch Unterdruck in den Raum eingebracht wird.

4. Vorrichtung zum Durchführen des Verfahrens nach den Ansprüchen 1 bis 3, bestehend aus einem abdichtbaren Behälter (1) mit darin angeordnetem Rührwerk (2) sowie Zuführleitungen (7 bzw. 12) für die flüssige Reaktionskomponente und den Zusatzstoff und einem Ablauf (8) für die flüssige, mit Zusatzstoff beladene Reaktionskomponente, wobei der Behälter (1) oberhalb des Füllspiegels (9) einen Saugstutzen (18) aufweist, der über eine Absaugleitung (19) an eine Vakuumquelle (20) angeschlossen ist, dadurch gekennzeichnet, daß die Zusatzstoff-Zuführleitung (12) unterhalb des Füllspiegels (9) in den Behälter (1) einmündet.

5. Vorrichtung nach Anspruch 4, dadurch gekennzeichnet, daß in der Zusatzstoff-Zuführleitung (32) ein Absperrventil (33) angeordnet ist.

6. Vorrichtung nach Anspruch 4, dadurch gekennzeichnet, daß die Zusatzstoff-Zuführleitung (12) über die Höhe des Füllspiegels (9) geführt ist.

7. Vorrichtung nach einem der Ansprüche 4 bis 6, dadurch gekennzeichnet, daß die Zusatzstoff-Zuführleitung (12) tangential, und zwar in Drehrichtung des Rührwerkes (2), in den Behälter (1) einmündet.

**Claims**

1. Process for mixing, with simultaneous degassing, pulverulent to small-particled additives into at least one of the liquid reaction components for the preparation of a reaction mixture forming a solid material or a foam, wherein the reaction component is introduced into a chamber which it fills only to a predetermined filling level (9) and wherein the chamber is sealed and a vacuum is applied above the filling level and wherein turbulence is produced in the liquid reaction component by stirring, characterised in that the additive supplied below the filling level (9) is introduced by means of the vacuum.

2. Process according to Claim 1, characterised in that the degassing of the reaction component and of the additive is continued after the introduction of the additive has terminated.

3. Process according to Claims 1 or 2, characterised in that the reaction component is also introduced into the chamber by means of vacuum.

4. Apparatus for carrying out the process according to Claims 1 to 3, consisting of a sealable container (1) with a stirrer (2) arranged therein and feed pipes (7 and 12) for the liquid reaction component and the additive and an outlet (8) for the liquid reaction component charged with the additive, wherein the container (1) has a suction connection (18) above the filling level (9) which is connected to a vacuum source (20) via a suction pipe (19), characterised in that the additive feed pipe (12) enters the container (1) below the filling level (9).

5. Apparatus according to Claim 4, characterised in that a shut-off valve (33) is arranged in the additive feed pipe (32).

6. Apparatus according to Claim 4, characterised in that the additive feed pipe (12) is directed above the height of the filling level (9).

7. Apparatus according to one of Claims 4 to 6, characterised in that the additive feed pipe (12) enters the container (1) tangentially in the direction of rotation of the stirrer (2).

**Revendications**

1. Procédé pour introduire et les mélanger, des additifs allant depuis la forme pulvérulente jusqu'à la faible granulométrie, tout en dégazant, dans au moins l'un des composants réactifs liquides servant à la fabrication d'un mélange réactif formant un produit compact ou une mousse, les composants réactifs étant amenés dans un volume qu'ils ne remplissent que jusqu'à un certain niveau de remplissage (9) déterminé, ce volume étant étanche et mis sous vide au-dessus du niveau de remplissage et une turbulence étant produite par un mélangeur dans les composants réactifs liquides, caractérisé en ce que l'additif introduit sous le niveau de remplissage (9) est amené au moyen du vide.

2. Procédé selon la revendication 1, caractérisé en ce que le dégazage des composants réactifs et de l'additif est poursuivi une fois terminée l'arrivée de l'additif.

3. Procédé selon l'une quelconque des revendications 1 ou 2, caractérisé en ce que les composants réactifs sont également amenés dans le volume par dépression.

4. Dispositif pour l'exécution du procédé selon les revendications de 1 à 3, constitué d'un récipient (1) que l'on peut rendre étanche comportant un mélangeur (2) qui y est disposé ainsi que des conduites d'introduction (7 et 12) pour les composants réactifs liquides et l'additif et une évacuation (8) pour les composants réactifs liquides chargés de l'additif, le récipient (1) présentant au-dessus du niveau de remplissage (9) une tubulure d'aspiration (18) reliée, par une conduite d'aspiration (19), à une source de vide (20), caractérisé en ce que la conduite d'introduction de l'additif (12) débouche dans le récipient (1) en-dessous du niveau de remplissage (9).

5. Dispositif selon la revendication 4, caractérisé en ce qu'un robinet d'arrêt (33) est disposé sur la conduite d'introduction de l'additif (32).

6. Dispositif selon la revendication 4, caractérisé en ce que la conduite d'introduction de l'additif (12) passe, sur son trajet, au-dessus du niveau de remplissage (9).

7. Dispositif selon l'une quelconque des revendications 4 â 6, caractérisé en ce que la conduite d'introduction de l'additif (12) débouche dans le récipient (1) tangentiellement et, de façon plus précise, dans le sens de rotation du mélangeur (2).

FIG.1

FIG. 2

FIG.3